# EUROPEAN PATENT APPLICATION

(11) **EP 4 224 919 A1**
(43) Date of publication of application: **09.08.2023**
(21) Application number: 20958193.3
(22) Date of filing: 22.10.2020
(51) Int. Cl.: H04W 28/02, H04W 72/04, H04W 24/02

(54) **COMMUNICATION METHOD AND APPARATUS**

(71) Applicant: Huawei Technologies Co., Ltd., Shenzhen, Guangdong 518129 (CN)
(72) Inventor: WU, Yedan, Shenzhen, Guangdong 518129 (CN); GENG, Tingting, Shenzhen, Guangdong 518129 (CN)
(74) Representative: Maiwald GmbH
(86) International application number: PCT/CN2020/122864
(87) International publication number: WO 2022/082611

(57) **Abstract**

This application discloses a communication method and apparatus, to resolve a problem that resource usage of a network device is inaccurate. The method includes: A first network device receives resource status information sent by a second network device, where the resource status information includes at least one of the following information: resource information related to a dual active protocol stack and resource information related to conditional handover; and the first network device determines resource usage of the second network device based on the resource status information. According to the foregoing method, the first network device may determine a resource to be released by the second network device, a resource that may be occupied, and the like, so that the resource usage of the second network device can be converted, to obtain accurate resource usage, and in particular, to more accurately estimate future predicted resource usage.

## Description

### TECHNICAL FIELD

This application relates to the field of communication technologies, and in particular, to a communication method and apparatus.

### BACKGROUND

In a current communication mechanism, for example, in long term evolution (long term evolution, LTE) and new radio (new radio, NR), network devices may exchange resource usage, to optimize network mobility parameter configuration.

A network device 1 may obtain resource usage of a network device 2 in the following manner. In one manner, the network device 1 sends a mobility parameter change request message to the network device 2, and may determine the resource usage of the network device 2 after receiving a response message sent by the network device 2. In another manner, the network device 1 sends a resource status request message to the network device 2, and obtains the resource usage of the network device 2 after receiving a resource status update message sent by the network device 2.

However, because an enhanced mobility solution, such as a dual active protocol stack (dual active protocol stack, DAPS) and conditional handover (conditional handover, CHO), is introduced in a new communication protocol, an existing resource interaction mechanism cannot accurately reflect the resource usage of the network devices. Consequently, the network devices cannot accurately know the resource usage of each other. Further, an error is likely to occur when the network devices adjust a mobility parameter based on the resource usage of each other. Consequently, an effect of mobility load balancing (mobility load balancing, MLB) is affected.

### SUMMARY

This application provides a communication method and apparatus, to resolve a problem that resource usage reported by a network device is inaccurate. According to a first aspect, an embodiment of this application provides a communication method. The method includes: A first network device receives resource status information sent by a second network device, where the resource status information includes at least one of the following information: resource information related to a DAPS or resource information related to CHO. The first network device determines resource usage of the second network device based on the resource status information.

In this embodiment of this application, when reporting the resource status information to the first network device, the second network device may indicate a resource related to the DAPS and a resource related to the CHO, so that the first network device determines, based on the resource status information reported by the second network device, a resource to be released by the second network device, a resource that may be occupied, and the like, so that the resource usage of the second network device can be converted, to obtain relatively accurate resource usage, and in particular, to more accurately estimate future predicted resource usage. When the first network device performs mobility load balancing based on information such as the resource to be released by the second network device and the resource that may be occupied, accuracy of the load balancing can be improved. For example, the first network device may convert, based on the resource of the second network device related to the DAPS, indicator values such as a radio resource of the second network device, a radio resource control (radio resource control, RRC) connection quantity, and a quantity of UEs, so as to reduce a degree to which the indicators such as the radio resource of the second network device, the RRC connection quantity, and the quantity of UEs are inflated, thereby properly adjusting a handover threshold of a source network device.

In a possible design, the resource information related to the DAPS includes at least one of the following information: a quantity of terminal devices in a DAPS state, a proportion of terminal devices in a DAPS state, a quantity of data radio bearers (data radio bearers, DRBs) in a DAPS state, and a proportion of DRBs in a DAPS state. In a DAPS mechanism, after receiving a handover message, the terminal device is temporarily connected to the source network device, and resources are occupied for a short period of time. In the foregoing design, the quantity or the proportion of terminal devices/DRBs in the DAPS state is indicated, so that the first network device can more accurately evaluate future resource usage of the second network device, and the first network device can more accurately obtain load of the second network device, thereby improving accuracy of the network load balancing.

In a possible design, the resource information related to the DAPS may include at least one of the following information: a quantity of terminal devices in a DAPS state among terminal devices accessing a first cell, a proportion of terminal devices in a DAPS state among terminal devices accessing a first cell, a quantity of DRBs in a DAPS state among terminal devices accessing a first cell, or a proportion of DRBs in a DAPS state among terminal devices accessing a first cell, where the first cell belongs to the second network device.

In a possible design, before the first network device receives the resource status information sent by the second network device, the method further includes: The first network device sends a request message to the second network device, where the request message requests the second network device to measure the resource usage, the request message carries first information, and the first information indicates the second network device to measure a resource related to the DAPS. In the foregoing design, the resource related to the DAPS is used as a type of measurement resource, so that the second network device may measure the resource related to the DAPS based on an indication of the first network device.

In a possible design, the resource information related to the DAPS includes a quantity of resources related to the DAPS for each of N categories of resources, where N is an integer greater than 0. Because use of many resources by a terminal device in the DAPS state is different from that by a terminal device in a normal case, the terminal device disconnects from a source network device after a period of time. In the foregoing implementation, a DAPS factor is considered for each type of resources, so that accuracy of a resource measurement report can be improved.

In a possible design, before the first network device receives the resource status information sent by the second network device, the method further includes: The first network device sends a request message to the second network device, where the request message requests the second network device to measure the resource usage, the request message carries second information, and the second information indicates the second network device to measure the resources related to the DAPS for each of the N categories of resources. In the foregoing design, the first network device indicates, through the request message, the second network device to consider the DAPS factor when measuring the N categories of resources, so that the second network device may measure, based on the indication of the first network device, the resources related to the DAPS for each of the N categories of resources.

In a possible design, the resource information related to the CHO includes at least one of the following information: a quantity of resources to be released due to the CHO and a quantity of resources reserved due to the CHO. In a CHO mechanism, the source network device sends in advance, to the terminal device, CHO configuration information corresponding to each of a plurality of candidate cells. After receiving the CHO configuration information, the terminal device does not directly disconnect from the source network device, and hands over to a target cell only when some conditions are met. In this period of time, all candidate network devices need to reserve resources for the terminal device. Although the resources are not used by the terminal device, the resources cannot be allocated to another terminal device, and the resources are released after the terminal device hands over to the target cell. In the foregoing design, the second network device indicates the resources, so that the first network device can more accurately evaluate future resource usage of the second network device, and the first network device can more accurately obtain the load of the second network device, thereby improving accuracy of the network load balancing.

In a possible design, a quantity of resources reserved due to the CHO is related to a quantity of terminal devices that are about to perform access (or a quantity of times that the first cell is determined as a candidate cell or a quantity of times that the second network device replies with a CHO response message) and a handover probability. According to the foregoing design, the first network device can more accurately evaluate the future resource usage of the second network device.

In a possible design, before the first network device receives the resource status information sent by the second network device, the method further includes: The first network device sends a request message to the second network device, where the request message requests the second network device to measure the resource usage, the request message carries third information, and the third information indicates the second network device to measure a resource related to the CHO. In the foregoing design, the resource related to the CHO is used as a type of measurement resource, so that the second network device may measure the resource related to the CHO based on an indication of the first network device.

In a possible design, the resource information related to the CHO includes respective CHO resource information of M categories of resources, where the CHO resource information of a first category of resources includes at least one of the following information: a first quantity of the first category of resources to be released due to the CHO and a second quantity of the first category of resources reserved due to the CHO, the first category belongs to the M categories, and M is an integer greater than 0. In the foregoing implementation, a CHO factor is considered for each type of resources, so that accuracy of a resource measurement report can be improved.

In a possible design, before the first network device receives the resource status information sent by the second network device, the method further includes: The first network device sends a request message to the second network device, where the request message requests the second network device to measure the resource usage, the request message carries fourth information, and the fourth information indicates the second network device to measure resources related to the CHO for each of the M categories of resources. In the foregoing design, the first network device indicates, through the request message, the second network device to consider the CHO factor when measuring the M categories of resources, so that the second network device may measure, based on the indication of the first network device, the resources related to the CHO for each of the M categories of resources.

In a possible design, the second quantity is related to a quantity of the first category of resources reserved when a first cell serves as a CHO candidate cell and a handover probability corresponding to the first cell, and the first cell belongs to the second network device. According to the foregoing design, the first network device can more accurately evaluate the future resource usage of the second network device.

In a possible design, a granularity of the resource status information is a cell granularity, a network device granularity, a beam granularity, or a slice granularity.

According to a second aspect, an embodiment of this application provides a communication method. The method includes: A second network device performs resource measurement. The second network device sends resource status information to a first network device, where the resource status information includes at least one of the following information: resource information related to a DAPS or resource information related to CHO.

In this embodiment of this application, when reporting the resource status information to the first network device, the second network device may indicate a resource related to the DAPS and a resource related to the CHO, so that the first network device determines, based on the resource status information reported by the second network device, a resource to be released by the second network device, a resource that may be occupied, and the like, so that the resource usage of the second network device can be converted, to obtain relatively accurate resource usage, and in particular, to more accurately estimate future predicted resource usage. When the first network device performs mobility load balancing based on information such as the resource to be released by the second network device and the resource that may be occupied, accuracy of the load balancing can be improved. For example, the first network device may convert, based on the resource of the second network device related to the DAPS, indicator values such as a radio resource of the second network device, an RRC connection quantity, and a quantity of UEs, so as to reduce a degree to which the indicators such as the radio resource of the second network device, the RRC connection quantity, and the quantity of UEs are inflated, thereby properly adjusting a handover threshold of a source network device.

In a possible design, the resource information related to the DAPS includes at least one of the following information: a quantity of terminal devices in a DAPS state, a proportion of terminal devices in a DAPS state, a quantity of DRBs in a DAPS state, or a proportion of DRBs in a DAPS state. In a DAPS mechanism, after receiving a handover message, the terminal device is temporarily connected to the source network device, and resources are occupied for a short period of time. In the foregoing design, the quantity or the proportion of terminal devices/DRBs in the DAPS state is indicated, so that the first network device can more accurately evaluate future resource usage of the second network device, and the first network device can more accurately obtain load of the second network device, thereby improving accuracy of the network load balancing.

In a possible design, the resource information related to the DAPS may include at least one of the following information: a quantity of terminal devices in a DAPS state among terminal devices accessing a first cell, a proportion of terminal devices in a DAPS state among terminal devices accessing a first cell, a quantity of DRBs in a DAPS state among terminal devices accessing a first cell, or a proportion of DRBs in a DAPS state among terminal devices accessing a first cell, where the first cell belongs to the second network device.

In a possible design, before the second network device performs the resource measurement, the second network device receives a request message sent by the first network device, where the request message requests the second network device to measure resource usage, the request message carries first information, and the first information indicates the second network device to measure a resource related to the DAPS. In the foregoing design, the resource related to the DAPS is used as a type of measurement resource, so that the second network device may measure the resource related to the DAPS based on an indication of the first network device.

In a possible design, the resource information related to the DAPS includes a quantity of resources related to the DAPS for each of N categories of resources, where N is an integer greater than 0. Because use of many resources by a terminal device in the DAPS is different from that by a terminal device in a normal case, the terminal device disconnects from a source network device after a period of time. In the foregoing implementation, a DAPS factor is considered for each type of resources, so that accuracy of a resource measurement report can be improved.

In a possible design, before the second network device performs the resource measurement, the second network device receives a request message sent by the first network device, where the request message requests the second network device to measure the resource usage, the request message carries second information, and the second information indicates the second network device to measure the resources related to the DAPS for each of the N categories of resources. In the foregoing design, the first network device indicates, through the request message, the second network device to consider the DAPS factor when measuring the N categories of resources, so that the second network device may measure, based on the indication of the first network device, the resources related to the DAPS for each of the N categories of resources.

In a possible design, the resource information related to the CHO includes at least one of the following information: a quantity of resources to be released due to the CHO and a quantity of resources reserved due to the CHO. In a CHO mechanism, the source network device sends in advance, to the terminal device, CHO configuration information corresponding to each of a plurality of candidate cells. After receiving the CHO configuration information, the terminal device does not directly disconnect from the source network device, and hands over to a target cell only when some conditions are met. In this period of time, all candidate network devices need to reserve resources for the terminal device. Although the resources are not used by the terminal device, the resources cannot be allocated to another terminal device, and the resources are released after the terminal device hands over to the target cell. In the foregoing design, the second network device indicates the resources, so that the first network device can more accurately evaluate future resource usage of the second network device, and the first network device can more accurately obtain the load of the second network device, thereby improving accuracy of the network load balancing.

In a possible design, a quantity of resources reserved due to the CHO is related to a quantity of terminal devices that are about to perform access (or a quantity of times that the first cell is determined as a candidate cell or a quantity of times that the second network device replies with a CHO response message) and a handover probability. According to the foregoing design, the first network device can more accurately evaluate the future resource usage of the second network device.

In a possible design, before the second network device performs resource measurement on a first cell, the second network device receives a request message sent by the first network device, where the request message requests the second network device to measure resource usage, the request message carries third information, and the third information indicates the second network device to measure a resource related to the CHO. In the foregoing design, the resource related to the CHO is used as a type of measurement resource, so that the second network device may measure the resource related to the CHO based on an indication of the first network device.

In a possible design, the resource information related to the CHO includes respective CHO resource information of M categories of resources, where the CHO resource information of a first category of resources includes at least one of the following information: a first quantity of the first category of resources to be released due to the CHO and a second quantity of the first category of resources reserved due to the CHO, the first category belongs to the M categories, and M is an integer greater than 0. In the foregoing implementation, a CHO factor is considered for each type of resources, so that accuracy of a resource measurement report can be improved.

In a possible design, before the second network device performs the resource measurement, the second network device receives a request message sent by the first network device, where the request message requests the second network device to measure resource usage, the request message carries fourth information, and the fourth information indicates the second network device to measure resources related to the CHO for each of the M categories of resources.

In a possible design, the second quantity is related to a quantity of the first category of resources reserved when a first cell serves as a CHO candidate cell and a handover probability corresponding to the first cell, and the first cell belongs to the second network device. According to the foregoing design, the first network device can more accurately evaluate the future resource usage of the second network device.

In a possible design, a granularity of the resource status information is a cell granularity, a network device granularity, a beam granularity, or a slice granularity.

According to a third aspect, this application provides a communication apparatus. The apparatus may be a network device, or may be a chip or a chip set in the network device. The apparatus may include a processing unit and a transceiver unit. When the apparatus is a network device, the processing unit may be a processor, and the transceiver unit may be a transceiver. The apparatus may further include a storage unit, and the storage unit may be a memory. The storage unit is configured to store instructions, and the processing unit executes the instructions stored in the storage unit, so that a core network device is enabled to perform a corresponding function in the first aspect or the second aspect. When the apparatus is a chip or a chip set in the network device, the processing unit may be a processor, and the transceiver unit may be an input/output interface, a pin, a circuit, or the like. The processing unit executes the instructions stored in the storage unit, to enable a core network device to perform a corresponding function in the first aspect or the second aspect. The storage unit may be a storage unit (for example, a register or a cache) in the chip or the chip set, or may be a storage unit (for example, a read-only memory or a random access memory) that is in the communication device and that is located outside the chip or the chip set.

According to a fourth aspect, an apparatus is provided. The apparatus includes a processor, a communication interface, and a memory. The communication interface is configured to transmit information, and/or a message, and/or data between the apparatus and another apparatus. The memory is configured to store computer-executable instructions. When the apparatus runs, the processor executes the computer-executable instructions stored in the memory, to enable the apparatus to perform the method in the first aspect or the second aspect.

According to a fifth aspect, this application further provides a communication system. The system includes the first network device in any embodiment of the first aspect and the second network device in any embodiment of the second aspect.

According to a sixth aspect, this application further provides a computer-readable storage medium. The computer-readable storage medium stores instructions. When the instructions are run on a computer, the computer is enabled to perform the method according to the first aspect or the second aspect.

According to a seventh aspect, this application further provides a computer program product including instructions. When the computer program product runs on a computer, the computer is enabled to perform the method according to the first aspect or the second aspect.

### BRIEF DESCRIPTION OF DRAWINGS

FIG. 1 is a schematic flowchart of negotiating a mobility parameter between network devices according to an embodiment of this application;
FIG. 2 is a schematic flowchart of exchanging resource usage by network devices according to an embodiment of this application;
FIG. 3 is a schematic diagram of a handover procedure according to an embodiment of this application;
FIG. 4 is a schematic diagram of a CHO process according to an embodiment of this application;
FIG. 5 is a schematic diagram of an architecture of a communication system according to an embodiment of this application;
FIG. 6 is a schematic diagram of a structure of an access network device according to an embodiment of this application;
FIG. 7 is a schematic diagram of a structure of another access network device according to an embodiment of this application;
FIG. 8 is a schematic diagram of a structure of an access network device according to an embodiment of this application;
FIG. 9 is a schematic flowchart of a communication method according to an embodiment of this application;
FIG. 10 is a schematic flowchart of a resource status information indication method according to an embodiment of this application;
FIG. 11 is a schematic flowchart of another resource status information indication method according to an embodiment of this application;
FIG. 12 is a schematic diagram of a structure of a communication apparatus according to an embodiment of this application; and
FIG. 13 is a schematic diagram of a structure of a communication apparatus according to an embodiment of this application.

### DESCRIPTION OF EMBODIMENTS

To facilitate understanding of embodiments of this application, the following describes terms or background related to embodiments of this application.

### 1. Mobility load balancing (mobility load balancing, MLB)

In an existing communication mechanism, for example, in LTE and NR, network devices exchange resource usage, so as to optimize network mobility parameter configuration.

The exchanged content may include transport layer resources, hardware usage, radio load, overall resource status, and the like.

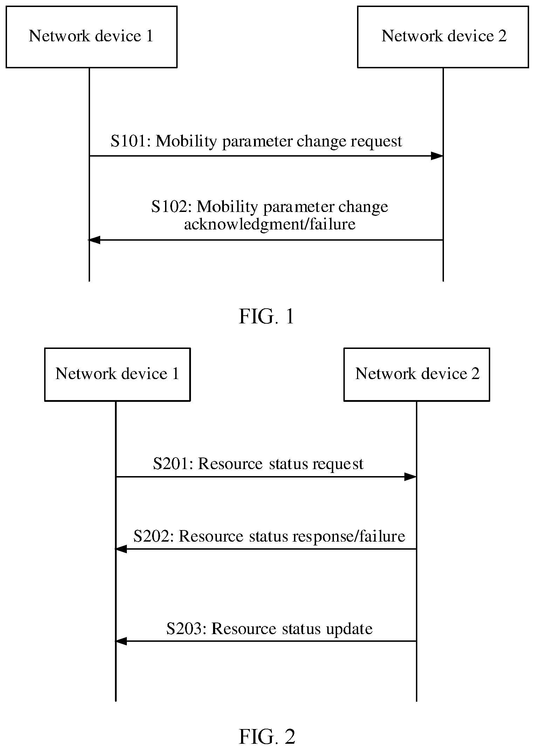

The following uses Xn as an example. There are two MLB procedures in TS 36.423 and TS 38.423. One procedure is that network devices negotiate a mobility parameter when the mobility parameter changes. As shown in FIG. 1, a process in which the network devices negotiate the mobility parameter is as follows.

S101: A network device 1 sends a mobility parameter change request (Mobility Change Request) to a network device 2.

S102: The network device 2 sends a mobility parameter change acknowledgment/failure (Mobility Change Acknowledge/failure) to the network device 1.

This process of the mobility parameter change may be caused by many reasons. One is that after two network devices exchange resource usage, one network device determines to enable the other network device to change a handover trigger threshold (Handover Trigger Change). For example, if the network device 1 finds that the network device 2 is idle, the network device 1 sends a mobility change request message to the network deice 2 to increase the handover trigger threshold, so that more terminal devices retain in the network device 2 instead of handing over to the network device 1. If the network device 2 accepts the request of the network device 1, the network device 2 sends a mobility change acknowledge. If the network device 2 does not accept the request, the network device 2 sends mobility change failure with a cause and an adjustment range. After receiving the adjustment range, the network device 1 may initiate another request.

The other procedure is that when a resource status report is initialized, network devices neighboring to each other exchange resource usage. As shown in FIG. 2, a process in which the network devices exchange the resource usage is as follows:
S201: The network device 1 sends a resource status request (Resource Status Request) to the network device 2.
S202: The network device 2 sends a resource status response/failure (Resource Status Response/Failure) to the network device 1.
S202: The network device 2 sends a resource status update (Resource Status Update) to the network device 1 after completing resource measurement.

If the network device 1 wants to know resource usage of the network device 2, the network device 1 may send a resource status request message to enable the network device 2 to start/stop/add measurement of various resources (some cells). If the network device 2 can successfully start measurement of all required resources, the network device 2 replies with a resource status response. If the network device 2 cannot start measurement of one resource, the network device 2 replies with a resource status failure. After the network device 2 measured various resources required by the network device 1, the network device 2 sends a measurement report to the network device 1.

### 3. Handover (Handover)

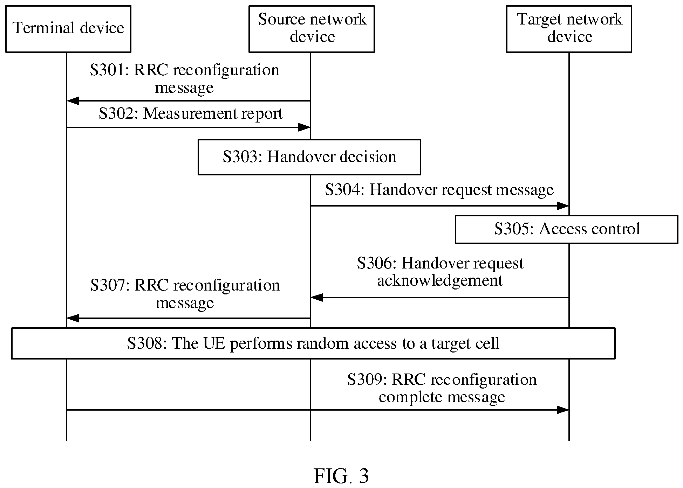

In a mobile communication system, in a conventional handover procedure, mobility management of a terminal device in a connected state is controlled by a network device. That is, a network device sends a handover message to indicate, to the terminal device, a cell to which the terminal device is to be handed over and how to perform handover. After receiving the handover message, the terminal device accesses a target cell based on content included in the handover message. As shown in FIG. 3, a handover procedure includes the following steps.

S301: A source network device sends a radio resource control (radio resource control, RRC) reconfiguration message to a terminal device, where the radio resource control reconfiguration message includes parameters such as a measurement object, a report configuration, and a measurement identifier.

S302: After measuring a series of cells based on the RRC reconfiguration message, the terminal device forms a measurement report and reports various events to the currently connected source network device, for example, a signal strength of a current serving cell is less than a threshold and a signal strength of a target cell is greater than the threshold.

S303: The source network device makes a handover decision, and determines whether the terminal device is to be handed over.

If the terminal device is to be handed over, S304 is performed, and the source network device sends a handover request message to a target network device.

S305: The target network device performs access control based on a situation such as a quantity of connections of the target network device, and determines whether to allow access of the terminal device.

If the access is allowed, S306 is performed, that is, the target network device sends a handover acknowledgment message to the source network device. The handover acknowledgment message includes parameters such as a new cell radio network temporary identifier (cell radio network temporary identifier, C-RNTI) and an algorithm related to security of the target network device.

S307: After receiving the handover acknowledgment message sent by the target network device, the source network device sends the RRC reconfiguration message (handover command) to the terminal device, where content included in the RRC reconfiguration message is from the handover acknowledgment message in S304. Specifically, a handover command in an NR system may include related information of a target cell and a related configuration parameter required by the terminal device for accessing the target cell. For example, the handover command includes information about the target cell (for example, a physical cell identifier (physical cell identifier, PCI) of the target cell), frequency information corresponding to the target cell, a C-RNTI allocated by the target cell to the terminal device, and resource information about a random access channel (random access channel, RACH) required for accessing the target cell.

S308: The terminal device initiates random access to the target network device according to the handover command, and disconnects from the source network device.

S309: The terminal device sends an RRC reconfiguration complete message to the target network device.

### 4. CHO

In order to improve a handover success rate and robustness, a CHO mechanism is proposed in a conventional technology.

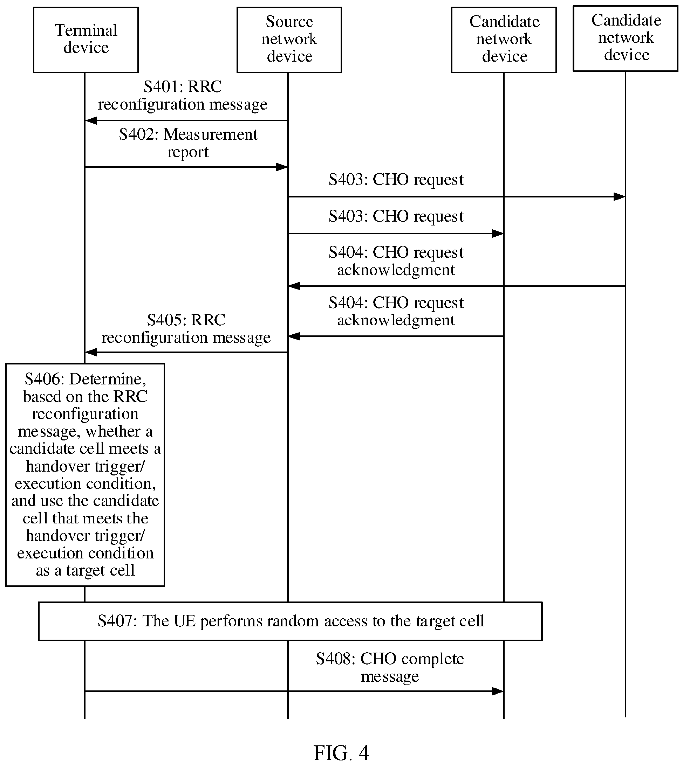

For example, a CHO process may be as shown in FIG. 4.

S401: A source network device sends an RRC reconfiguration message to a terminal device, where the RRC reconfiguration message includes parameters such as a measurement object, a report configuration, and a measurement identifier.

S402: After measuring a series of cells based on the RRC reconfiguration message, the terminal device forms a measurement report and reports various events to the currently connected source network device, for example, a signal strength of a current serving cell is less than a threshold and a signal of a target cell is greater than the threshold.

S403: The source network device sends a CHO request to at least one candidate network device.

S404: The at least one candidate network device separately sends a CHO request acknowledgment to the source network device.

S405: The source network device sends the RRC reconfiguration message to the terminal device, where the RRC reconfiguration message carries CHO configuration information respectively corresponding to a plurality of candidate cells.

In the CHO, a network may configure one or more candidate cells for a terminal device. If a network configures a plurality of candidate cells for a terminal device, the network may send, to the terminal device through one RRC message or a plurality of RRC messages, CHO configuration information respectively corresponding to the plurality of candidate cells. The foregoing RRC message may reuse an existing RRC reconfiguration message. For example, the RRC message may be an RRC reconfiguration message carrying a reconfiguration with synchronization (reconfiguration with sync) information element, or the RRC message may be an RRC connection reconfiguration message carrying a mobility control information (mobility control info) element. CHO configuration information may include a CHO trigger condition (or an execution condition), and related information of a candidate cell (for example, a C-RNTI allocated by a candidate cell to a terminal device, RACH resource information required for accessing a candidate cell, a cell global identifier (cell global identifier, CGI) of a candidate cell, and/or a PCI of a candidate cell and frequency information corresponding to the candidate cell. Optionally, related information of a candidate cell may further include resource information corresponding to the candidate cell (for example, a physical layer configuration parameter, a media access control (media access control, MAC) layer configuration parameter, a radio link control (radio link control, RLC) layer configuration parameter, a packet data convergence protocol (packet data convergence protocol, PDCP) layer configuration parameter, a service data adaptation protocol (service data adaption protocol, SDAP) layer configuration parameter, and an RRC layer configuration parameter.

In addition, the CHO trigger condition (or the execution condition) may include a CHO execution event type and a corresponding threshold. The CHO execution event type may include an event A3 (quality of a neighboring cell is greater than that of a special cell (special cell, Spcell) by a certain offset), an event A4 (a measurement result of a neighboring cell is higher than a threshold (threshold)), an event A5 (a Spcell is lower than a threshold 1 and a neighboring cell is higher than a threshold 2), an event B1 (a neighboring cell of an inter radio access technology (radio access technology, RAT) (inter RAT) is better than a threshold), an event B2 (a primary cell (primary cell, PCell) is lower than a threshold 3 and a neighboring cell of an inter RAT is higher than a threshold 4), another execution event type, or the like. A candidate cell may be configured with one or more CHO execution conditions.

S406: The terminal device determines, based on the RRC reconfiguration message, whether a candidate cell meets a handover trigger/execution condition, and uses a candidate cell that meets the handover trigger/execution condition as a target cell.

Specifically, the terminal device may determine, based on the CHO configuration information, whether the CHO trigger/execution condition is met. For example, a CHO trigger event type configured for a candidate cell A is the A3 event, and a configured corresponding threshold is a first threshold. When cell signal quality of the candidate cell A is higher than cell signal quality of a serving cell by the first threshold, it may be considered that the candidate cell A meets the CHO trigger condition, and the candidate cell A may be determined as the target cell. The signal quality may include at least one of reference signal received power (reference signal received power, RSRP), reference signal received quality (reference signal received quality, RSRQ), and a signal to interference plus noise ratio (signal to interference plus noise ratio, SINR). For example, the signal quality includes the RSRP and the RSRQ, or the signal quality includes the RSRP and the SINR. This is not limited herein. In another example, a CHO trigger event type configured for a corresponding candidate cell B is the A5 event, and a configured corresponding threshold is a second threshold or a third threshold. When cell signal quality of the candidate cell B is higher than the second threshold, and cell signal quality of a serving cell is lower than a third threshold, it may be considered that the candidate cell B meets the CHO trigger condition, and the candidate cell B may be determined as the target cell.

S407: The terminal device performs random access to the determined target cell.

S408: The terminal device sends a CHO complete message to the target cell, to notify a target network device that the conditional handover is completed.

### 5. DAPS

A new handover mechanism called a DAPS mechanism is proposed to reduce interruption latency and achieve 0-ms interruption in a handover process. In the DAPS mechanism, after receiving a handover message, a terminal device maintains a connection to a source access network device, and establishes a connection to a target access network device. The terminal device disconnects from the source access network device only after the target access network device sends a release indication to the terminal device.

### (1) For downlink (downlink, DL):

After sending the handover message to the terminal device, the source network device may continue to send a DL data packet to the terminal device. In addition, DL data forwarding may be performed between the source network device and the target network device.

After receiving the handover message, the terminal device maintains data transmission with the source network device, that is, the terminal device maintains the connection to the source network device, and the terminal device establishes a connection to the target network device.

### (2) For uplink (uplink, UL):

After receiving the handover message, the terminal device may continue to perform UL data transmission with the source network device. When a RACH procedure in the target cell succeeds, the terminal device starts to perform data transmission with the target network device. The terminal device connects to both the source network device and the target network device within a period of time, and the terminal device disconnects from the source network device only after the target network device sends a release indication to the terminal device.

It should be noted that, with continuous development of a technology, a term in embodiments of this application may change, but the term shall fall within the protection scope of this application.

To make an objective, a technical solution, and an advantage of embodiments of this application more distinct, the following further describes embodiments of this application in detail with reference to the accompanying drawings.

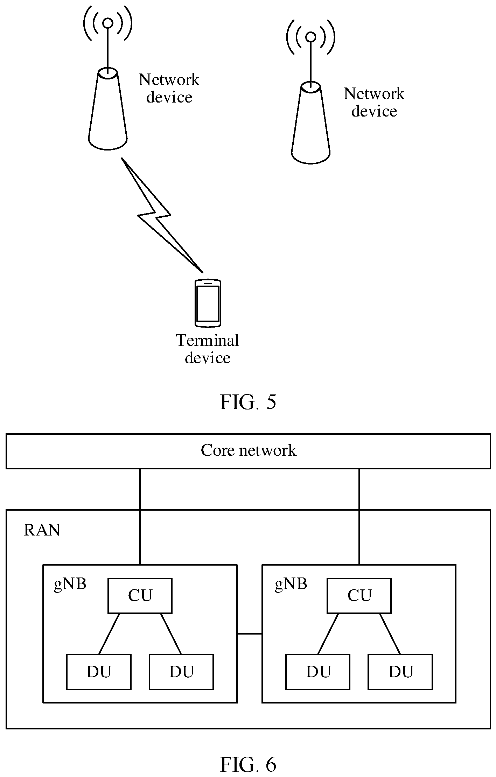

The communication method provided in embodiments of this application may be applied to a communication system shown in FIG. 5. The communication system may include two network devices, and may further include a terminal device. The two network devices may be connected through interfaces such as Xn, X2, F1, and E1. It should be understood that FIG. 5 is merely an example for description, and quantities of terminal devices and network devices included in the communication system are not specifically limited.

The communication method provided in this application may be applied to various communication systems, for example, an internet of things (internet of things, IoT) system, a narrowband internet of things (narrowband internet of things, NB-IoT) system, an LTE system, a fifth generation (5G) communication system, an LTE and 5G hybrid architecture, a 5G NR system, or a new communication system emerging in future communication development.

The terminal device in embodiments of this application is an entity that is on a user side and that is configured to receive or transmit a signal. The terminal device may be a device that provides a user with voice and/or data connectivity, for example, a handheld device or a vehicle-mounted device having a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a remote station (remote station), an access point (access point), a remote terminal (remote terminal), an access terminal (access terminal), a user terminal (user terminal), a user agent (user agent), a user device (user device), user equipment (user equipment, UE), or the like. The terminal device may be a mobile terminal, for example, a mobile phone (or referred to as a "cellular" phone), and a computer that has a mobile terminal. For example, the terminal device may be a portable, pocket-sized, handheld, computer built-in, or in-vehicle mobile apparatus, which exchanges audio and/or data with the radio access network. For example, the terminal device may alternatively be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). A common terminal device includes, for example, a mobile phone, a tablet, a notebook computer, a palmtop computer, a mobile internet device (mobile internet device, MID), and a wearable device such as a smart watch, a smart band, or a pedometer. However, this is not limited in embodiments of this application.

The network device in embodiments of this application is an entity that is on a network side and that is configured to transmit or receive a signal. For example, the network device may be an evolved NodeB (evolved NodeB, eNB or e-NodeB) in LTE, a new radio controller (new radio controller, NR controller), a gNodeB (gNB) in a 5G system, a central unit (central unit), a new radio base station, a radio remote module, a micro base station, a relay (relay), a distributed unit (distributed unit), a transmission reception point (transmission reception point, TRP), a transmission point (transmission point, TP), or any other radio access device. However, this is not limited in embodiments of this application. The network device may cover one or more cells.

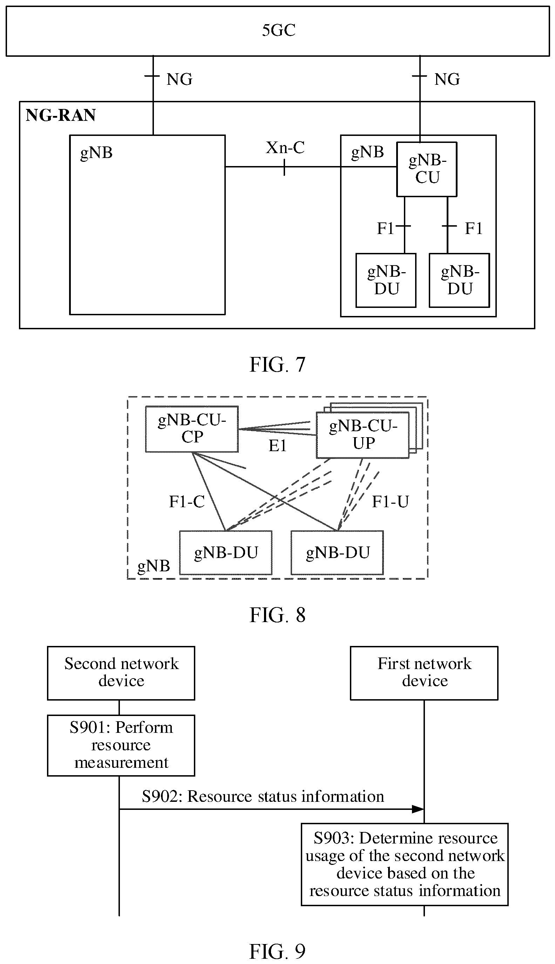

For example, the access network device may be split into two parts based on a protocol stack function: a central unit (central unit, CU) and a distributed unit (distributed unit, DU). As shown in FIG. 6, one access network device may include one CU and at least one DU. The CU is connected to the at least one DU, and may be configured to manage or control the at least one DU. In this structure, protocol layers of the access network device in the communication system may be split. Some protocol layer functions are implemented in the CU, and some remaining protocol layers functions or all of the protocol layers functions are distributed and implemented in the DU. The CU centrally controls the DU. For example, the access network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in embodiments of this application. As shown in FIG. 7, the CU and the DU may be connected through an F1 interface, the CU and another access network device are connected through an Xn interface, and the CU and a 5G core (5G Core, 5GC) network are connected through an NG interface.

For example, the CU in embodiments of this application may be further divided into one control plane (CU-control plane, CU-CP) network element and at least one user plane (CU-user plane, CU-UP) network element. The CU-CP may be used for control plane management, and the CU-UP may be used for user plane data transmission. An interface between the CU-CP and the CU-UP may be an E1 interface. An interface between the CU-CP and the DU may be F1-C, and is used for control plane signaling transmission. An interface between the CU-UP and the DU may be F1-U, and is used for user plane data transmission. The CU-UP and the CU-UP may be connected through an Xn-U interface, to perform user plane data transmission. For example, the gNB is used as an example. A structure of the gNB may be as shown in FIG. 8.

A network device in embodiments of this application may be a CU, a DU, a CU-CP, or a CU-UP.

A network architecture and a service scenario described in embodiments of this application are intended to more distinctly describe technical solutions in embodiments of this application, and do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

In a current communication mechanism, for example, in LTE and NR, network devices may exchange resource usage, so as to optimize network mobility parameter configuration.

A network device 1 may obtain resource usage of a network device 2 in the following manner. In one manner, the network device 1 sends a mobility parameter change request message to the network device 2, and may determine the resource usage of the network device 2 after receiving a response message sent by the network device 2. In another manner, a network device 1 sends a resource status request message to a network device 2, and obtains resource usage of the network device 2 after receiving a resource status update message sent by the network device 2. However, because an enhanced mobility solution, such as a DAPS and CHO, is introduced in a new communication protocol, an existing resource interaction mechanism cannot accurately reflect the resource usage of the network devices. Consequently, the network devices cannot accurately know the resource usage of each other. Further, an error is likely to occur when the network devices adjust a mobility parameter based on the resource usage of each other. Consequently, an effect of MLB is affected.

For example, after the network device 2 sends a resource status update message to the network device 1, some terminal devices disconnect from the network device 2. As a result, indicators such as a radio resource of the network device 2, an RRC connection quantity, and a quantity of terminal devices that are of the network device 2 and that obtained by the network device 1 are inflated. Consequently, a handover threshold of a source network device is improperly raised. For another example, after the network device 2 sends a resource status update message to the network device 1, some terminal devices access the network device. As a result, indicators such as the radio resource, the RRC connection quantity, and the quantity of terminal devices that are of the network device 2 and that are obtained by the network device 1 are lower than actual ones. Consequently, the handover threshold of the source network device is improperly reduced.

Based on this, embodiments of this application provide a communication method and apparatus. The communication method may be a resource status indication method, a resource status obtaining method, a mobility load balancing method, a mobility load balancing parameter indication method, a mobility load balancing parameter obtaining method, or the like, to resolve a problem that the resource usage reported by a network device is inaccurate. The method and the apparatus are based on a same invention concept. Because the method and the apparatus have a similar problem-resolving principle, for implementations of the apparatus and the method, refer to each other. No repeated description is provided.

It should be understood that, in embodiments of this application, "at least one" indicates one or more, and "a plurality of" indicates two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or plural items (pieces). For example, at least one item (piece) of a, b, or c may indicate a, b, c, a and b, a and c, b and c, or a, b, and c, where a, b, and c may be singular or plural.

It should be understood that the terms used in this application are merely for the purpose of describing a specific embodiment, and are not intended to limit this application. The terms "a", "the", and "this" of singular forms used in this application and the appended claims are also intended to include plural forms, unless otherwise specified in a context clearly.

In addition, although terms such as first, second, and third may be used in this application to describe various information, the information should not be limited to these terms. These terms are only used to differentiate information of a same type. For example, first information may also be referred to as second information without departing from the scope of this application. Similarly, second information may also be referred to as first information. Depending on the context, for example, words "if" used herein may be explained as "while" or "when" or "in response to determining".

The following describes in detail the communication method provided in this application with reference to the accompanying drawings.

FIG. 9 shows a communication method according to an embodiment of this application. The method may specifically include the following steps.

S901: A second network device performs resource measurement to obtain resource status information, where the resource status information includes at least one of the following information: resource information related to a DAPS and resource information related to CHO.

For example, the second network device may perform the resource measurement by using a network device as a granularity. That is, the second network device may collect statistics on each resource of the second network device. Therefore, a granularity of the obtained resource status information is a network device granularity. For example, if the second network device is a base station, the granularity of the resource status information is a base station granularity. For another example, if the second network device is a CU, the granularity of the resource status information is a CU granularity. For another example, if the second network device is a DU, the granularity of the resource status information is a DU granularity.

Alternatively, the second network device may perform the resource measurement by using a cell as a granularity. That is, the second network device may collect statistics on each resource of each cell that belongs to the second network device. Therefore, a granularity of the obtained resource status information is a cell granularity.

Alternatively, the second network device may perform the resource measurement by using a beam (beam) or a synchronization signal/physical broadcast channel block (ss/pbch block, SSB) as a granularity. That is, the second network device may collect statistics on each resource of each beam (or each SSB) of the second network device. Therefore, a granularity of the obtained resource status information is a beam granularity.

Alternatively, the second network device may perform the resource measurement by using a slice (slice) as a granularity. That is, the second network device may collect statistics on each resource of each slice of the second network device. Therefore, a granularity of the obtained resource status information is a slice granularity.

In addition, the second network device may also perform the resource measurement by using a cell group as a granularity. That is, the second network device performs the resource measurement for each cell group. One cell group includes at least one cell that belongs to the second network device. Grouping of the cell group of the second network device is not specifically limited herein. For another example, the second network device may also perform the resource measurement by using a beam group as a granularity. That is, the second network device performs the resource measurement for each beam group. One beam group includes at least one beam of the second network device. Grouping of the beam group of the second network device is not specifically limited herein. For another example, the second network device may also perform the resource measurement by using a slice group as a granularity. That is, the second network device performs the resource measurement for each slice group. One slice group includes at least one slice of the second network device. Grouping of the slice group of the second network device is not specifically limited herein.

Certainly, the second network device may also perform the resource measurement by using another granularity, and a granularity that may be used when the second network device performs the resource measurement is not listed one by one herein.

S902: The second network device sends the resource status information to a first network device. Correspondingly, the first network device receives the resource status information sent by the second network device.

The second network device may send the resource status information to the first network device through an interface such as Xn, X2, F1, or E1. Alternatively, the second network device may forward the resource status information to the first network device by using another device. For example, the second network device sends the resource status information to a first core network, the first core network forwards the resource status information to a second core network, and then the second core network sends the resource status information to the first network device. For example, the second network device is a 5G base station, the first network device is a 4G base station, the second network device may send the resource status information to a 5G core network (5G core, 5GC), the 5GC forwards the resource status information to an evolved packet core (evolved packet core, EPC), and the EPC forwards the resource status information to the first network device.

S903: The first network device determines resource usage of the second network device based on the resource status information.

In this embodiment of this application, when reporting the resource status information to the first network device, the second network device may indicate a resource related to the DAPS and a resource related to the CHO, so that the first network device determines, based on the resource status information reported by the second network device, a resource to be released by the second network device, a resource that may be occupied, and the like, so that the resource usage of the second network device can be converted, to obtain relatively accurate resource usage, and in particular, to more accurately estimate future predicted resource usage. When the first network device performs mobility load balancing based on information such as the resource to be released by the second network device and the resource that may be occupied, accuracy of the load balancing can be improved. For example, the first network device may convert, based on the resource of the second network device related to the DAPS, indicator values such as a radio resource of the second network device, an RRC connection quantity, and a quantity of UEs, so as to reduce a degree to which the indicators such as the radio resource of the second network device, the RRC connection quantity, and the quantity of UEs are inflated, thereby properly adjusting a handover threshold of a source network device.

In a possible embodiment, the resource measurement performed by the second network device may be triggered by the second network device. That is, the second network device actively measures and reports resource status information.

In another possible embodiment, before step S907, the first network device may send a request message to the second network device, where the request message requests the second network device to measure resource usage. In this embodiment, the resource measurement performed by the second network device is triggered by the request message sent by the first network device.

In an implementation, the request message sent by the first network device may be valid for one time, and the second network device reports the resource usage once after receiving the request message.

In another implementation, the request message sent by the first network device may be valid for a plurality of times, and the second network device may report the resource usage periodically after receiving the request message.

In another implementation, the request message sent by the first network device may be valid for a plurality of times, and the second network device reports the resource usage based on some conditions or events after receiving the request message. For example, a measured resource meets a certain percentage.

Optionally, after receiving the request message, the second network device may start related measurement based on a requirement in the request message. If it is found that any resource in a report category cannot be measured, the second network device replies with a resource status failure (Resource status failure) message to the first network device; otherwise, the second network device replies with a resource status response (Resource status response) message to the first network device. The resource status response message indicates that each measurement is successfully started, and the measurement is not completed.

Optionally, the request message may include a measurement ID.

The request message may further include a report category list. The report category may indicate a category of resources that needs to be measured and for which a report needs to be sent, for example, an air interface resource (Physical Resource Block or Radio resource status), a transport layer (transparent network layer, TNL) resource (Transparent Network Layer Capacity), a hardware resource (Hardware Capacity Indicator), an available slice capacity, a quantity of activated UEs, an RRC connection quantity, and an overall available resource (Composite Available Capacity). The report category may be a binary character string, and each bit represents a resource. A value of a bit may indicate whether to measure and report the category of resources. For example, if a value of a bit is 1, it indicates that a resource corresponding to the bit needs to be measured and reported, or if a value of a bit is 0, it indicates that a resource corresponding to the bit does not need to be measured and reported.

The air interface resource may be a usage percentage of an uplink/downlink guaranteed bit rate (guaranteed bit rate, GBR) or non-guaranteed bit rate (non-guaranteed bit rate, Non-GBR), or the like. The transport layer resource may include an uplink/downlink TNL, a percentage of an available uplink/downlink TNL, and the like. The overall available resource may include a cell capacity level and an available capacity percentage (for example, a total available capacity percentage of a cell and an available capacity percentage of each SSB). The hardware resource may include an uplink/downlink available hardware capacity, and the like. The available slice capacity may include an available capacity of each slice, and the like. The RRC connection quantity may include an RRC connection quantity, an available percentage of RRC connections, and the like.

The request message may further include a cell list (a cell whose resources need to be measured), an SSB list (a beam in the cell that needs to be measured), a slice list (a slice in the cell that needs to be measured), and the like.

The request message may further include a report period, for example, the report period may be 500 milliseconds, so that the second network device may perform reporting once every 500 milliseconds. Optionally, if the request message does not carry the report period, the second network device may perform reporting once.

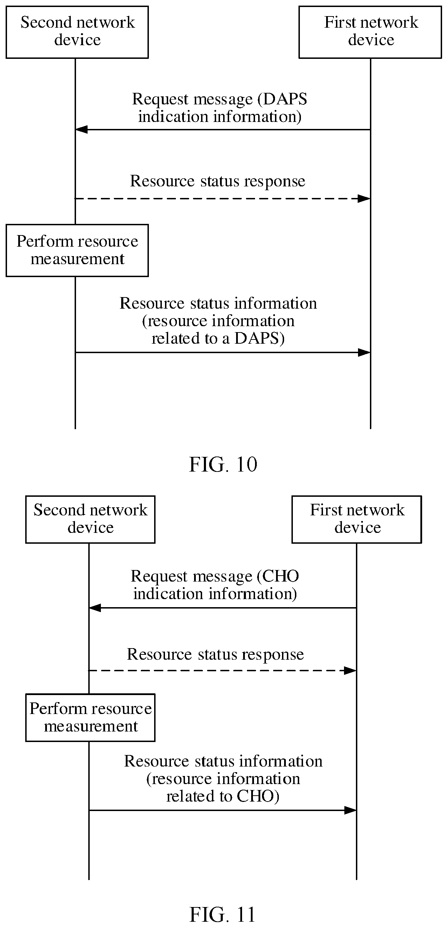

The request message may carry DAPS indication information. The DAPS indication information indicates the second network device to measure and report a resource related to the DAPS. After receiving the request message, the second network device may collect statistics on the resource related to the DAPS. Correspondingly, the resource status information includes resource information related to the DAPS, for example, as shown in FIG. 10.

In an implementation, the request message may carry first information indicating to measure the resource related to the DAPS. For example, the request message may include the first information in the report category, that is, the resource related to the DAPS is used as a type of measurement resource. For example, the report category may include one bit, and the bit indicates whether to measure and report the resource related to the DAPS. A value of the bit may indicate whether to measure the resource related to the DAPS. For example, if a value of a bit is 1, it indicates that the resource related to the DAPS needs to be measured and reported, or if a value of a bit is 0, it indicates that the resource related to the DAPS does not need to be measured and reported.

After receiving the request message, the second network device may collect statistics on at least one of the following: a quantity of terminal devices in a DAPS state and a quantity of DRBs in a DAPS state. Correspondingly, the resource information related to the DAPS may include at least one of the following information: a quantity of terminal devices in a DAPS state, a proportion of terminal devices in a DAPS state, a quantity of DRBs in a DAPS state, or a proportion of DRBs in a DAPS state.

In an example, it is assumed that the first network device indicates, in the report category of the request message, the second network device to measure and report radio usage, the RRC connection quantity, and the resource related to the DAPS. The resource status information sent by the second network device to the first network device may be as shown in Table 1.

**Table 1**

| |
|---|
| Radio usage |
| RRC connection quantity |
| Resource related to the DAPS |
| >Quantity of UEs/DRBs in the DAPS |
| >Proportion of UEs/DRBs in the DAPS |

The radio usage, the RRC connection quantity, and the resource related to the DAPS are in a parallel structure. The quantity of UEs/DRBs in the DAPS and the proportion of UEs/DRBs in the DAPS are lower-level subdirectories of the resource related to the DAPS.

For example, a granularity of resource measurement is a cell granularity. After receiving the request message, the second network device may collect statistics on at least one of the following: a quantity of terminal devices in a DAPS state among terminal devices accessing a first cell, and a quantity of DRBs in a DAPS state among terminal devices accessing a first cell. The first cell belongs to the second network device. Correspondingly, the resource information related to the DAPS may include at least one of the following information: the quantity of terminal devices in the DAPS state among the terminal devices accessing the first cell, a proportion of terminal devices in the DAPS state among the terminal devices accessing the first cell, the quantity of DRBs in the DAPS state among the terminal devices accessing the first cell, or a proportion of DRBs in the DAPS state among the terminal devices accessing the first cell. The first cell belongs to the second network device.

For example, a granularity of resource measurement is a network device granularity. After receiving the request message, the second network device may collect statistics on at least one of the following: a quantity of terminal devices in a DAPS state among terminal devices accessing the second network device, and a quantity of DRBs in a DAPS state among terminal devices accessing the second network device. Correspondingly, the resource information related to the DAPS may include at least one of the following information: the quantity of terminal devices in the DAPS state among the terminal devices accessing the second network device, a proportion of terminal devices in the DAPS state among the terminal devices accessing the second network device, the quantity of DRBs in the DAPS state among the terminal devices accessing the second network device, or a proportion of DRBs in the DAPS state among the terminal devices accessing the second network device.

When a terminal device in a connected state is connected to a network device, data is transmitted through one or more DRBs. When performing handover, the terminal device may select, by using a DRB as a granularity, whether to use a DAPS method. For example, the terminal device has three DRBs. During a handover process, a possible situation is that a DRB 1 is configured with DAPS, and a DRB 2 and a DRB 3 are configured for common handover. Therefore, in the foregoing method, the second network device collects statistics on the resource related to the DAPS by using a DRB as a granularity, so that accuracy of a resource measurement report can be improved.

In another implementation, the request message may carry second information indicating a measurement device to measure resources related to the DAPS for each of N categories of resources, where N is an integer greater than 0. For example, the second information may indicate the second network device to consider a DAPS factor when the second network device measures N categories of resources. The N categories of resources may be resources indicated by the report category carried in the request message. Optionally, the second information may be implicit or explicit. This is not limited herein.

After receiving the request message, the second network device may determine, for each type of resources, a quantity of resources related to the DAPS in the type of resources. Correspondingly, the resource information related to the DAPS may include a quantity of resources related to the DAPS for each of N categories of resources.

Optionally, measurement parameters such as the air interface resource, the transport layer resource, the overall available resource, the hardware resource, the available slice capacity, the quantity of activated UEs, and the RRC connection quantity may be separately used as a resource category. Alternatively, a plurality of measurement parameters may be used as a resource category. For example, the air interface resource and the transport layer resource are used as a resource category. For another example, the RRC connection quantity, the hardware resource, and the overall available resource are used as a resource category.

In an example, it is assumed that the first network device indicates, in the report category in the request message, the second network device to measure and report the radio usage and the RRC connection quantity, and carries the second information indicating that the DAPS factor is considered. The resource status information sent by the second network device to the first network device may be as shown in Table 2.

**Table 2**

| |
|---|
| Radio usage |
| >Information element included in the current protocol |
| >Radio usage related to the DAPS |
| RRC connection quantity |
| >Information element included in the current protocol |
| >RRC connection quantity for the DAPS |

The radio usage is in a parallel relationship with the RRC connection quantity, and two information elements related to the DAPS are in a parallel relationship with the information element included in the current protocol.

Because use of many resources by a terminal device in the DAPS is different from that by a terminal device in a normal case, the terminal device disconnects from a source network device within a period of time. In the foregoing implementation, a DAPS factor is considered for each type of resource, so that accuracy of a resource measurement report can be improved.

The request message may carry CHO indication information. The CHO indication information indicates the second network device to measure and report the resource related to the CHO. After receiving the request message, the second network device may collect statistics on the resource related to the CHO. Correspondingly, the resource status information includes the resource information related to the CHO, for example, as shown in FIG. 11.

In an implementation, the request message may carry third information indicating to measure the resource related to the CHO. For example, the request message may include the third information in the report category, that is, the resource related to the CHO is used as a type of measurement resource. For example, the report category may include one bit, and the bit indicates whether to measure and report the resource related to the CHO. A value of the bit may indicate whether to measure the resource related to the CHO. For example, if a value of a bit is 1, it indicates that the resource related to the CHO needs to be measured and reported, or if a value of a bit is 0, it indicates that the resource related to the CHO does not need to be measured and reported.

After receiving the request message, the second network device may collect statistics on at least one of the following: a resource to be released due to the CHO and a resource reserved due to the CHO. Correspondingly, the resource information related to the CHO may include at least one of the following information: a quantity of resources to be released due to the CHO and a quantity of resources reserved due to the CHO.

The resource to be released due to the CHO may be a quantity of terminal devices that are about to perform the CHO, that is, terminal devices that have received the RRC reconfiguration message in step S405 but have not performed cell handover.

For example, the quantity of resources reserved due to the CHO may be related to the quantity of terminal devices that are about to perform access (or a quantity of times that the first cell is determined as a candidate cell or a quantity of times that the second network device replies with a CHO response message) and a handover probability. The second network device may perform conversion based on the handover probability when collecting statistics on the resources reserved due to the CHO. For example, the second network device reserves 1% of resources, and the handover probability is 50%, the quantity of resources reserved due to the CHO may be 1% x 50% = 0.5%.

Alternatively, the quantity of resources reserved due to the CHO may be a quantity of resources counted by the second network device. After receiving the quantity of resources reserved due to the CHO, the first network device may perform conversion based on the handover probability.

In an example, it is assumed that the first network device indicates, in the report category in the request message, the second network device to measure and report radio usage, the RRC connection quantity, and a resource related to the CHO. The resource status information sent by the second network device to the first network device may be as shown in Table 3.

**Table 3**

| |
|---|
| Radio usage |
| RRC connection quantity |
| Resource related to the CHO |
| >Quantity of resources to be released due to the CHO |
| >Quantity of resources reserved due to the CHO |

The radio usage, the RRC connection quantity, and the resource related to the CHO are in a parallel structure, that is, the quantity of resources to be released due to the CHO and the quantity of resources reserved due to the CHO are lower-level subdirectories of the resource related to the CHO.

A cell granularity is used as an example. After receiving the request message, the second network device may collect statistics on at least one of the following: a quantity of terminal devices that are about to hand over from a first cell to a second cell, a quantity of terminal devices that are about to access a first cell, a quantity of times that a first cell is determined as a candidate cell, and a quantity of times that the first cell replies with a CHO response message. The first cell belongs to the second network device, and the second cell is a cell other than the first cell. The second cell may belong to the second network device, the first network device, or another network device. Correspondingly, the resource information related to the CHO may include at least one of the following information: a quantity of terminal devices that are about to hand over from a first cell to a second cell, a quantity of terminal devices that are about to access a first cell, a quantity of times that a first cell is determined as a candidate cell, and a quantity of times that the first cell replies with a CHO response message.

A network device granularity is used as an example. After receiving the request message, the second network device may collect statistics on at least one of the following: a quantity of terminal devices that are about to hand over from the second network device to another network device, a quantity of terminal devices that are about to access the second network device, a quantity of times that the second network device is determined as a candidate network device, and a quantity of times that the second network device replies with a CHO response message. Correspondingly, the resource information related to the CHO may include at least one of the following information: a quantity of terminal devices that are about to hand over from the second network device to another network device (equivalent to the quantity of resources to be released due to the CHO), a quantity of terminal devices that are about to access the second network device (equivalent to the quantity of resources reserved due to the CHO), a quantity of times that the second network device is determined as a candidate network device (equivalent to the quantity of resources reserved due to the CHO), and a quantity of times that the second network device replies with a CHO response message (equivalent to the quantity of resources reserved due to the CHO).

In another implementation, the request message may carry fourth information indicating a measurement device to measure resources related to the CHO for each of M categories of resources, where M is an integer greater than 0. For example, the fourth information may indicate the second network device to consider a DAPS factor when the second network device measures M categories of resources. The M categories of resources may be resources indicated by the report category carried in the request message. Optionally, the fourth information may be implicit or explicit. This is not limited herein. For the M categories of resources, refer to related descriptions of the N categories of resources. Details are not described herein again.

After receiving the request message, the second network device may determine, for each type of resources, a quantity of resources related to the CHO in the type of resources. For example, for a first category of resources, the second network device determines at least one of the following information about the first category of resources: a first quantity of the first category of resources to be released due to the CHO and a second quantity of the first category of resources reserved due to the CHO, and the first category belongs to the M categories. Correspondingly, the resource information related to the CHO may include respective CHO resource information of the M categories of resources, where the CHO resource information of a first category of resources includes at least one of the following information: a first quantity of the first category of resources to be released due to the CHO and a second quantity of the first category of resources reserved due to the CHO, and the first category belongs to the M categories.

A cell granularity is used as an example. After receiving the request message, the second network device may determine, for each type of resources of the first cell, a quantity of resources related to the CHO in the type of resources. For example, for a first category of resources of the first cell, the second network device determines at least one of the following information about the first category of resources of the first cell: a first quantity of the first category of resources to be released from the first cell due to the CHO and a second quantity of the first category of resources reserved in the first cell due to the CHO, and the first category belongs to the M categories. Correspondingly, the resource information related to the CHO may include at least one of the following information: respective CHO resource information of M categories of resources of the first cell, where the CHO resource information of a first category of resources of the first cell includes at least one of the following information: a first quantity of the first category of resources to be released from the first cell due to the CHO, and a second quantity of the first category of resources reserved in the first cell due to the CHO.

In an example, it is assumed that the first network device indicates, in the report category in the request message, the second network device to measure and report the radio usage and the RRC connection quantity, and carries the fourth information indicating that the CHO factor is considered. The resource status information sent by the second network device to the first network device may be as shown in Table 4.

**Table 4**

| |
|---|
| Radio usage |
| >Information element included in the current protocol |
| >Radio usage related to the CHO |
| >>Radio resource to be released due to the CHO |
| >>Radio resource reserved due to the CHO |
| RRC connection quantity |
| >Information element included in the current protocol |
| >RRC connection quantity related to the CHO |
| >>RRC connection quantity to be released due to the CHO |
| >>RRC connection quantity reserved due to the CHO |

The radio usage is in a parallel relationship with the RRC connection quantity, and an information element related to the CHO are in a parallel relationship with the information element included in the current protocol. A specific CHO expanded information element is a next level.

In a DAPS mechanism, after receiving a handover message, a terminal device is temporarily connected to a source network device. Although resources are occupied, the resources are released soon. In this embodiment of this application, a network device on a transmitter side indicates the resources, so that a network device on a receiver side can more accurately evaluate future resource usage of the network device on the transmitter side, and the network device on the receiver side can more accurately obtain load of the network device on the transmitter side, thereby improving accuracy of the network load balancing.

In a CHO mechanism, the source network device sends in advance, to the terminal device, CHO configuration information corresponding to each of a plurality of candidate cells. After receiving the CHO configuration information, the terminal device does not directly disconnect from the source network device, and hands over to a target cell only when some conditions are met. In this period of time, all candidate network devices need to reserve resources for the terminal device. Although the resources are not used by the terminal device, the resources cannot be allocated to another terminal device, and the resources are released after the terminal device hands over to the target cell. In this embodiment of this application, the network device on the transmitter side indicates the resources, so that the network device on the receiver side can more accurately evaluate future resource usage of the network device on the transmitter side, and the network device on the receiver side can more accurately obtain load of the network device on the transmitter side, thereby improving accuracy of the network load balancing.

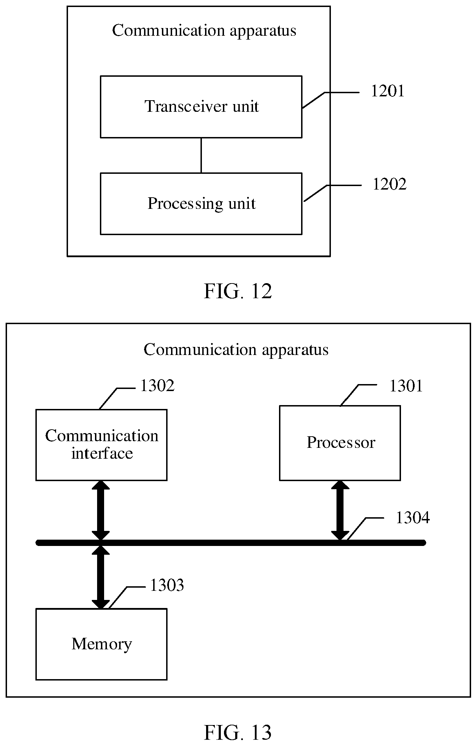

Based on a same invention concept as that of method embodiments, an embodiment of this application provides a communication apparatus. A structure of the apparatus may be as shown in FIG. 12, and the apparatus includes a transceiver unit 1201 and a processing unit 1202.

In a specific implementation, the apparatus may be specifically configured to implement the method performed by the first network device in the embodiments of FIG. 9 to FIG. 11. The apparatus may be the first network device, may be a chip or a chip set in the first network device, or may be a part of the chip or a part of the chip set configured to perform a related method function. The transceiver unit 1201 is configured to receive resource status information sent by a second network device, where the resource status information includes at least one of the following information: resource information related to a DAPS or resource information related to CHO. The processing unit 1202 is configured to determine resource usage of the second network device based on the resource status information.

Optionally, the resource information related to the DAPS includes at least one of the following information: a quantity of terminal devices in a DAPS state, a proportion of terminal devices in a DAPS state, a quantity of DRBs in a DAPS state, or a proportion of DRBs in a DAPS state.

The transceiver unit 1201 may be further configured to: before receiving the resource status information sent by the second network device, send a request message to the second network device, where the request message requests the second network device to measure the resource usage, the request message carries first information, and the first information indicates the second network device to measure a resource related to the DAPS.

Optionally, the resource information related to the DAPS includes a quantity of resources related to the DAPS for each of N categories of resources, where N is an integer greater than 0.

The transceiver unit 1201 may be further configured to: before receiving the resource status information sent by the second network device, send a request message to the second network device, where the request message requests the second network device to measure the resource usage, the request message carries second information, and the second information indicates the second network device to measure the resources related to the DAPS for each of the N categories of resources.

Optionally, the resource information related to the CHO includes at least one of the following information: a quantity of resources to be released due to the CHO and a quantity of resources reserved due to the CHO.

The transceiver unit 1201 may be further configured to: before receiving the resource status information sent by the second network device, send a request message to the second network device, where the request message requests the second network device to measure the resource usage, the request message carries third information, and the third information indicates the second network device to measure a resource related to the CHO.

Optionally, the resource information related to the CHO includes respective CHO resource information of M categories of resources, where the CHO resource information of a first category of resources includes at least one of the following information: a first quantity of the first category of resources to be released due to the CHO and a second quantity of the first category of resources reserved due to the CHO, the first category belongs to the M categories, and M is an integer greater than 0.

The transceiver unit 1201 may be further configured to: before receiving the resource status information sent by the second network device, send a request message to the second network device, where the request message requests the second network device to measure the resource usage, the request message carries fourth information, and the fourth information indicates the second network device to measure resources related to the CHO for each of the M categories of resources.

Optionally, the second quantity is related to a quantity of the first category of resources reserved when a first cell serves as a CHO candidate cell and a handover probability corresponding to the first cell, and the first cell belongs to the second network device.

Optionally, a granularity of the resource status information is a cell granularity, a network device granularity, a beam granularity, or a slice granularity.

In another specific implementation, the apparatus may be specifically configured to implement the method performed by the second network device in the embodiments of FIG. 9 to FIG. 11. The apparatus may be the second network device, may be a chip or a chip set in the second network device, or may be a part of the chip or a part of the chip set configured to perform a related method function. The processing unit 1202 is configured to perform resource measurement. The transceiver unit 1201 is configured to send resource status information to a first network device, where the resource status information includes at least one of the following information: resource information related to a DAPS and resource information related to CHO.

Optionally, the resource information related to the DAPS includes at least one of the following information: a quantity of terminal devices in a DAPS state, a proportion of terminal devices in a DAPS state, a quantity of DRBs in a DAPS state, or a proportion of DRBs in a DAPS state.

The transceiver unit 1201 may be further configured to: before the processing unit 1202 performs the resource measurement, receive a request message sent by the first network device, where the request message requests the second network device to measure resource usage, the request message carries first information, and the first information indicates the second network device to measure a resource related to the DAPS.

Optionally, the resource information related to the DAPS includes: a quantity of resources related to the DAPS for each of N categories of resources, where N is an integer greater than 0.

The transceiver unit 1201 may be further configured to: before the processing unit 1202 performs the resource measurement, receive a request message sent by the first network device, where the request message requests the second network device to measure resource usage, the request message carries second information, and the second information indicates the second network device to measure the resources related to the DAPS for each of the N categories of resources.

Optionally, the resource information related to the CHO includes at least one of the following information: a quantity of resources to be released due to the CHO and a quantity of resources reserved due to the CHO.

The transceiver unit 1201 may be further configured to: before the processing unit 1202 performs the resource measurement, receive a request message sent by the first network device, where the request message requests the second network device to measure resource usage, the request message carries third information, and the third information indicates the second network device to measure a resource related to the CHO.

Optionally, the resource information related to the CHO includes: respective CHO resource information of M categories of resources, where the CHO resource information of a first category of resources includes at least one of the following information: a first quantity of the first category of resources to be released due to the CHO and a second quantity of the first category of resources reserved due to the CHO, the first category belongs to the M categories, and M is an integer greater than 0.

The transceiver unit 1201 may be further configured to: before the processing unit 1202 performs the resource measurement, receive a request message sent by the first network device, where the request message requests the second network device to measure resource usage, the request message carries fourth information, and the fourth information indicates the second network device to measure the resources related to the CHO for each of the M categories of resources.

Optionally, the second quantity is related to a quantity of a first category of resources reserved when a first cell serves as a CHO candidate cell and a handover probability corresponding to the first cell, and the first cell belongs to the second network device.

Optionally, a granularity of the resource status information is a cell granularity, a network device granularity, a beam granularity, or a slice granularity.

In embodiments of this application, division of a unit is an example and merely a logical function division. There may be another division method in actual implementation. In addition, each functional unit in each embodiment of this application may be integrated into one processor, or may exist alone physically, or two or more units may be integrated into one unit. The integrated units may be implemented in a form of hardware or in a form of a software functional unit. It may be understood that for functions or implementations of each unit in embodiments of this application, further refer to related descriptions in method embodiments.

In a possible manner, a communications apparatus may be as shown in FIG. 13. The communication apparatus may be a network device or a chip in a network device. The apparatus may include a processor 1301, a communication interface 1302, and a memory 1303. The processing unit 1202 may be the processor 1301. The transceiver unit 1201 may be the communication interface 1302.

The processor 1301 may be a central processing unit (central processing unit, CPU), a digital processing unit, or the like. The communication interface 1302 may be a transceiver, an interface circuit such as a transceiver circuit, a transceiver chip, or the like. The communications apparatus further includes a memory 1303, configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium capable of carrying or storing an expected program code in a form of instructions or data structures and capable of being accessed by a computer, but is not limited thereto.

The processor 1301 is configured to execute a program code stored in the memory 1303, and is specifically configured to perform an action of the processing unit 1202. Details are not described herein again in this application.

The communication interface 1302 is configured to perform an action of the transceiver unit 1201. Details are not described in this application again.

A specific connection medium among the foregoing communication interface 1302, the processor 1301, and the memory 1303 is not limited in this embodiment of this application. In this embodiment of this application, in FIG. 13, the memory 1303, the processor 1301, and the communication interface 1302 are connected through a bus 13012. The bus is represented by using a bold line in FIG. 13. A connection manner between other components is merely an example for description and is not limited thereto. The bus may be classified into an address bus, a data bus, a control bus, and the like. For ease of representation, only one bold line is used to represent the bus in FIG. 13, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

A person skilled in the art should understand that embodiments of this application may be provided as a method, a system, or a computer program product. Therefore, this application may use a form of a hardware only embodiment, a software only embodiment, or an embodiment with a combination of software and hardware. In addition, this application may use a form of a computer program product that is implemented on one or more computer-usable storage media (including but not limited to a disk storage, a CD-ROM, an optical memory, and the like) that include a computer-usable program code.

This application is described with reference to flowcharts and/or block diagrams of a method, a device (system), and a computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be stored in a computer-readable memory that can indicate a computer or another programmable data processing device to work in a specific manner, so that the instructions stored in a computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
receiving, by a first network device, resource status information sent by a second network device, wherein the resource status information comprises at least one of the following information: resource information related to a dual active protocol stack DAPS or resource information related to conditional handover CHO; and
determining, by the first network device, resource usage of the second network device based on the resource status information.

2. The method according to claim 1, wherein the resource information related to the DAPS comprises at least one of the following information: a quantity of terminal devices in a DAPS state, a proportion of terminal devices in a DAPS state, a quantity of data radio bearers DRBs in a DAPS state, and a proportion of DRBs in a DAPS state.

3. The method according to claim 2, wherein before the receiving, by a first network device, resource status information sent by a second network device, the method further comprises:
sending, by the first network device, a request message to the second network device, wherein the request message requests the second network device to measure the resource usage, the request message carries first information, and the first information indicates the second network device to measure a resource related to the DAPS.

4. The method according to claim 1, wherein the resource information related to the DAPS comprises a quantity of resources related to the DAPS for each of N categories of resources, wherein N is an integer greater than 0.

5. The method according to claim 4, wherein before the receiving, by a first network device, resource status information sent by a second network device, the method further comprises:
sending, by the first network device, a request message to the second network device, wherein the request message requests the second network device to measure the resource usage, the request message carries second information, and the second information indicates the second network device to measure the resources related to the DAPS for each of the N categories of resources.

6. The method according to any one of claims 1 to 5, wherein the resource information related to the CHO comprises at least one of the following information: a quantity of resources to be released due to the CHO and a quantity of resources reserved due to the CHO.

7. The method according to claim 6, wherein before the receiving, by a first network device, resource status information sent by a second network device, the method further comprises:
sending, by the first network device, a request message to the second network device, wherein the request message requests the second network device to measure the resource usage, the request message carries third information, and the third information indicates the second network device to measure a resource related to the CHO.

8. The method according to any one of claims 1 to 5, wherein the resource information related to the CHO comprises respective CHO resource information of M categories of resources, wherein the CHO resource information of a first category of resources comprises at least one of the following information: a first quantity of the first category of resources to be released due to the CHO and a second quantity of the first category of resources reserved due to the CHO, the first category belongs to the M categories, and M is an integer greater than 0.

9. The method according to claim 8, wherein before the receiving, by a first network device, resource status information sent by a second network device, the method further comprises:
sending, by the first network device, a request message to the second network device, wherein the request message requests the second network device to measure the resource usage, the request message carries fourth information, and the fourth information indicates the second network device to measure resources related to the CHO for each of the M categories of resources.

10. The method according to claim 8 or 9, wherein the second quantity is related to a quantity of the first category of resources reserved when a first cell serves as a CHO candidate cell and a handover probability corresponding to the first cell, and the first cell belongs to the second network device.

11. The method according to any one of claims 1 to 10, wherein a granularity of the resource status information is a cell granularity, a network device granularity, a beam granularity, or a slice granularity.

12. A communication method, wherein the method comprises:
performing, by a second network device, resource measurement; and
sending, by the second network device, resource status information to a first network device, wherein the resource status information comprises at least one of the following information: resource information related to a dual active protocol stack DAPS or resource information related to conditional handover CHO.

13. The method according to claim 12, wherein the resource information related to the DAPS comprises at least one of the following information: a quantity of terminal devices in a DAPS state, a proportion of terminal devices in a DAPS state, a quantity of data radio bearers DRBs in a DAPS state, and a proportion of DRBs in a DAPS state.

14. The method according to claim 13, wherein before the performing, by a second network device, resource measurement, the method further comprises:
receiving, by the second network device, a request message sent by the first network device, wherein the request message requests the second network device to measure resource usage, the request message carries first information, and the first information indicates the second network device to measure a resource related to the DAPS.

15. The method according to claim 12, wherein the resource information related to the DAPS comprises: a quantity of resources related to the DAPS for each of N categories of resources, wherein N is an integer greater than 0.

16. The method according to claim 15, wherein before the performing, by a second network device, resource measurement, the method further comprises:
receiving, by the second network device, a request message sent by the first network device, wherein the request message requests the second network device to measure resource usage, the request message carries second information, and the second information indicates the second network device to measure the resources related to the DAPS for each of the N categories of resources.

17. The method according to any one of claims 12 to 16, wherein the resource information related to the CHO comprises at least one of the following information: a quantity of resources to be released due to the CHO and a quantity of resources reserved due to the CHO.

18. The method according to claim 17, wherein before performing, by the second network device, resource measurement on a first cell, the method further comprises:
receiving, by the second network device, a request message sent by the first network device, wherein the request message requests the second network device to measure resource usage, the request message carries third information, and the third information indicates the second network device to measure a resource related to the CHO.

19. The method according to any one of claims 12 to 16, wherein the resource information related to the CHO comprises: respective CHO resource information of M categories of resources, wherein the CHO resource information of a first category of resources comprises at least one of the following information: a first quantity of the first category of resources to be released due to the CHO and a second quantity of the first category of resources reserved due to the CHO, the first category belongs to the M categories, and M is an integer greater than 0.

20. The method according to claim 19, wherein before the performing, by a second network device, resource measurement, the method further comprises:
receiving, by the second network device, a request message sent by the first network device, wherein the request message requests the second network device to measure resource usage, the request message carries fourth information, and the fourth information indicates the second network device to measure the resources related to the CHO for each of the M categories of resources.

21. The method according to claim 19 or 20, wherein the second quantity is related to a quantity of the first category of resources reserved when a first cell serves as a CHO candidate cell and a handover probability corresponding to the first cell, and the first cell belongs to the second network device.

22. The method according to any one of claims 12 to 21, wherein a granularity of the resource status information is a cell granularity, a network device granularity, a beam granularity, or a slice granularity.

23. A communication apparatus, wherein the apparatus comprises:
a transceiver unit, configured to receive resource status information sent by a second network device, wherein the resource status information comprises at least one of the following information: resource information related to a dual active protocol stack DAPS or resource information related to conditional handover CHO; and
a processing unit, configured to determine resource usage of the second network device based on the resource status information.

24. The apparatus according to claim 23, wherein the resource information related to the DAPS comprises at least one of the following information: a quantity of terminal devices in a DAPS state, a proportion of terminal devices in a DAPS state, a quantity of data radio bearers DRBs in a DAPS state, and a proportion of DRBs in a DAPS state.

25. The apparatus according to claim 24, wherein the transceiver unit is further configured to:
before receiving the resource status information sent by the second network device, send a request message to the second network device, wherein the request message requests the second network device to measure the resource usage, the request message carries first information, and the first information indicates the second network device to measure a resource related to the DAPS.

26. The apparatus according to claim 23, wherein the resource information related to the DAPS comprises a quantity of resources related to the DAPS for each of N categories of resources, wherein N is an integer greater than 0.

27. The apparatus according to claim 26, wherein the transceiver unit is further configured to:
before receiving the resource status information sent by the second network device, send a request message to the second network device, wherein the request message requests the second network device to measure the resource usage, the request message carries second information, and the second information indicates the second network device to measure the resources related to the DAPS for each of the N categories of resources.

28. The apparatus according to any one of claims 23 to 27, wherein the resource information related to the CHO comprises at least one of the following information: a quantity of resources to be released due to the CHO and a quantity of resources reserved due to the CHO.

29. The apparatus according to claim 28, wherein the transceiver unit is further configured to:
before receiving the resource status information sent by the second network device, send a request message to the second network device, wherein the request message requests the second network device to measure the resource usage, the request message carries third information, and the third information indicates the second network device to measure a resource related to the CHO.

30. The apparatus according to any one of claims 23 to 27, wherein the resource information related to the CHO comprises respective CHO resource information of M categories of resources, wherein the CHO resource information of a first category of resources comprises at least one of the following information: a first quantity of the first category of resources to be released due to the CHO, and a second quantity of the first category of resources reserved due to the CHO, the first category belongs to the M categories, and M is an integer greater than 0.

31. The apparatus according to claim 30, wherein the transceiver unit is further configured to:
before receiving the resource status information sent by the second network device, send a request message to the second network device, wherein the request message requests the second network device to measure the resource usage, the request message carries fourth information, and the fourth information indicates the second network device to measure resources related to the CHO for each of the M categories of resources.

32. The apparatus according to claim 30 or 31, wherein the second quantity is related to a quantity of the first category of resources reserved when a first cell serves as a CHO candidate cell and a handover probability corresponding to the first cell, and the first cell belongs to the second network device.

33. The apparatus according to any one of claims 23 to 32, wherein a granularity of the resource status information is a cell granularity, a network device granularity, a beam granularity, or a slice granularity.

34. A communication apparatus, wherein the apparatus comprises:
a processing unit, configured to perform resource measurement; and
a transceiver unit, configured to send resource status information to a first network device, wherein the resource status information comprises at least one of the following information: resource information related to a dual active protocol stack DAPS or resource information related to conditional handover CHO.

35. The apparatus according to claim 34, wherein the resource information related to the DAPS comprises at least one of the following information: a quantity of terminal devices in a DAPS state, a proportion of terminal devices in a DAPS state, a quantity of data radio bearers DRBs in a DAPS state, and a proportion of DRBs in a DAPS state.

36. The apparatus according to claim 35, wherein the transceiver unit is further configured to:
before the processing unit performs the resource measurement, receive a request message sent by the first network device, wherein the request message requests the second network device to measure resource usage, the request message carries first information, and the first information indicates the second network device to measure a resource related to the DAPS.

37. The apparatus according to claim 34, wherein the resource information related to the DAPS comprises: a quantity of resources related to the DAPS for each of N categories of resources, wherein N is an integer greater than 0.

38. The apparatus according to claim 37, wherein the transceiver unit is further configured to:
before the processing unit performs the resource measurement, receive a request message sent by the first network device, wherein the request message requests the second network device to measure resource usage, the request message carries second information, and the second information indicates the second network device to measure the resources related to the DAPS for each of N categories of resources.

39. The apparatus according to any one of claims 34 to 38, wherein the resource information related to the CHO comprises at least one of the following information: a quantity of resources to be released due to the CHO and a quantity of resources reserved due to the CHO.

40. The apparatus according to claim 39, wherein the transceiver unit is further configured to:
before the processing unit performs the resource measurement, receive a request message sent by the first network device, wherein the request message requests the second network device to measure resource usage, the request message carries third information, and the third information indicates the second network device to measure a resource related to the CHO.

41. The apparatus according to any one of claims 34 to 38, wherein the resource information related to the CHO comprises: respective CHO resource information of M categories of resources, wherein the CHO resource information of a first category of resources comprises at least one of the following information: a first quantity of the first category of resources to be released due to the CHO and a second quantity of the first category of resources reserved due to the CHO, the first category belongs to the M categories, and M is an integer greater than 0.

42. The apparatus according to claim 41, wherein the transceiver unit is further configured to:
before the processing unit performs the resource measurement, receive a request message sent by the first network device, wherein the request message requests the second network device to measure resource usage, the request message carries fourth information, and the fourth information indicates the second network device to measure the resources related to the CHO for each of the M categories of resources.

43. The apparatus according to claim 41 or 42, wherein the second quantity is related to a quantity of the first category of resources reserved when a first cell serves as a CHO candidate cell and a handover probability corresponding to the first cell, and the first cell belongs to the second network device.

44. The apparatus according to any one of claims 34 to 43, wherein a granularity of the resource status information is a cell granularity, a network device granularity, a beam granularity, or a slice granularity.

45. A communication device, wherein the communication device comprises a transceiver, a processor, and a memory; the memory stores program instructions; and when the program instructions are executed, the communication device is enabled to perform the method according to any one of claims 1 to 11, or the communication device is enabled to perform the method according to any one of claims 12 to 22.

46. A chip, wherein the chip is coupled to a memory in an electronic device, so that when the chip is run, the chip invokes program instructions stored in the memory, to implement the method according to any one of claims 1 to 11, or to implement the method according to any one of claims 12 to 22.

47. A computer-readable storage medium, wherein the computer-readable storage medium comprises program instructions, and when the program instructions are run on a device, the device is enabled to perform the method according to any one of claims 1 to 22.
